Europäisches Patentamt

European Patent Office

Office européen des brevets

(11) Publication number: **0 314 408 B1**

# EUROPEAN PATENT SPECIFICATION

(45) Date of publication of patent specification: **18.11.93**  (51) Int. Cl.⁵: **C01B 3/38**, B01J 8/06

(21) Application number: **88309950.9**

(22) Date of filing: **21.10.88**

The file contains technical information submitted after the application was filed and not included in this specification

(54) **Reformer with low fired duty per unit of feedstock.**

(30) Priority: **23.10.87 US 112722**

(43) Date of publication of application:
**03.05.89 Bulletin 89/18**

(45) Publication of the grant of the patent:
**18.11.93 Bulletin 93/46**

(84) Designated Contracting States:
**BE DE FR GB IT NL**

(56) References cited:
**EP-A- 0 047 359**
**DE-A- 1 767 598**
**GB-A- 2 050 413**

**PATENT ABSTRACTS OF JAPAN, vol. 11, no. 159 (C-423)[2606], 22nd May 1987; & JP-A-61 291 403 (MITSUBISHI HEAVY IND LTD) 22-12-1986**

(73) Proprietor: **C F BRAUN INC**
**1000 South Fremont Avenue**
**Alhambra, California 91802-3900(US)**

(72) Inventor: **Grotz, Bernard John**
**1180 Glen Oaks Boulevard**
**Pasadena California 91105(US)**
Inventor: **Frankini, Vito**
**2500 South Fourth Avenue**
**Arcadia California 91006(US)**

(74) Representative: **Goldin, Douglas Michael et al**
**J.A. KEMP & CO.**
**14, South Square**
**Gray's Inn**
**London WC1R 5EU (GB)**

EP 0 314 408 B1

## Description

Background of the Invention

The present invention relates in general to the tubes used in hydrocarbon reforming processes and particularly to processes wherein a hydrocarbon is reformed to obtain hydrogen.

The production of hydrogen from natural gas and other hydrocarbons is well known in the art. Generally, natural gas, such as methane, or other hydrocarbons, and water in the form of steam, are combined in a series of chemical reactions to produce hydrogen in a catalyst-filled tube. The following two chemical reactions are the principal reactions involved in the process:

Reforming Reaction

$$CH_4 + H_2O \rightleftharpoons CO + 3H_2 - 97,000 \text{ Btu/mole } (-102,341 \text{ kJ/mole})$$

Shift Reaction

$$CO + H_2O \rightleftharpoons CO_2 + H_2 + 16,500 \text{ Btu/mole } (+17,408 \text{ kJ/mole})$$

The field of the present invention relates to the heating surface of catalyst tubes in steam reforming heaters commonly used in ammonia and hydrogen plants to produce hydrogen. The preferred embodiment of this invention comprises integral radiant-convection reformer tubes.

Description of Prior Art

The endothermic reforming reaction takes place by reacting some portion of hydrocarbon feed with steam to produce hydrogen and carbon monoxide in catalyst-filled tubes in steam reforming furnaces. Previously, all of the required heat imparted to the steam reformer tubes took place in the radiant section of the furnace where the entire tube was exposed to radiant heat from the burner flame.

The total fired heat liberation is proportional to the amount of radiant heat required. Typically less than half of the heat released in imparted to the catalyst-filled tube by thermal radiation. The balance of the heat is carried by the flue gases leaving the radiant section and is recovered in various coils located in the convection section where flue gas flows transverse to the horizontal tubes that make up the convection coils of the steam reforming furnace. The various convection coils used to recover heat from the flue gases include: the combined hydrocarbon feed plus steam preheat coil, other process preheat coils, boiler feedwater coil, fuel preheat coil, combustion air preheat coil, and the superheated steam coil. The alternative to using the above coils for cooling the convection flue gases is to pass the hot flue gases directly to the atmosphere, thereby losing the energy contained in the hot flue gas.

To reduce the heat load in the radiant section, the combined hydrocarbon feed plus steam is typically preheated to very high tempratures in the convection coils before passing to the radiant section of the furnace, thereby requiring construction from expensive alloy material for the combined hydrocarbon feed plus steam preheat coil and crossover piping interconnecting with the catalyst-filled tubes.

For primary reformers using high temperature gas turbine exhaust for combustion air, combustion air preheaters cannot be used to recover heat from the convection flue gases. Instead, coils for boiler feedwater preheating, steam generation, and steam superheating are the only viable means of recovering maximum heat from flue gases. This heat recovery may require either using steam drivers in the plant for equipment which could otherwise be operated at lower capital cost with electric motors or exporting excess steam production to unfavorable local markets.

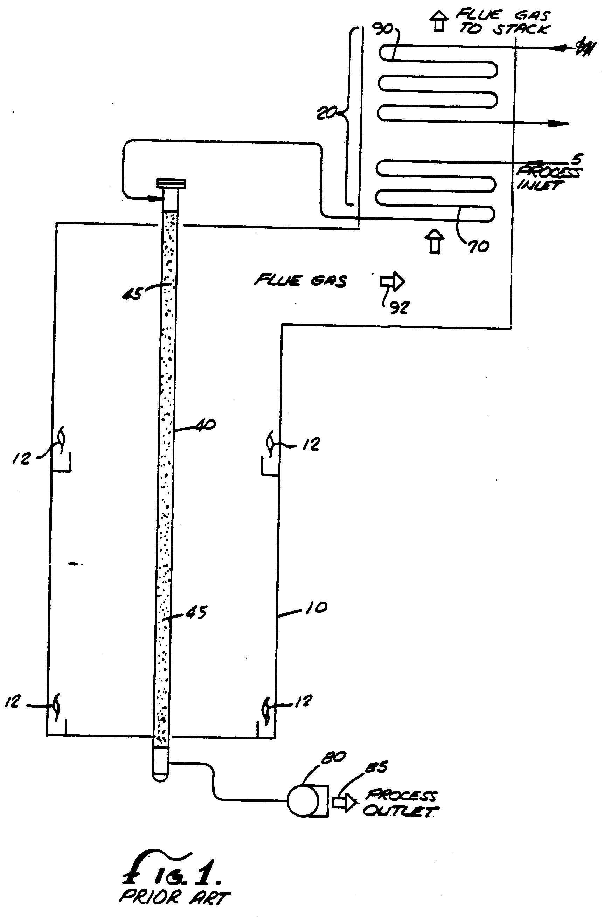

Fig. 1 illustrates a conventional reformer with a furnace 10 having burners 12 located therein. Tube 40 is filled with catalyst 45 and runs the height of the furnace 10. A process fluid mixture enters through process inlet 5 and is preheated by flue gas 92 within a convection section 20 before being injected into tube 40. The fluid mixture travels through the catalyst-filled tube 40 and exits to a manifold 80 and process outlet 85. The fluid mixture within tube 40 is heated almost completely by radiant heat transfer within furnace 10. The flue gas 92 exiting through stack convection section 20 is at a very high temperature. Some of the heat value within flue gas 92 is recovered by pre-heating the fluid mixture in exchanger tube 70 in stack convection section 20. Other heat is recovered by making steam by running fluid through exchanger tubes 90 also positioned in stack convection section 20.

GB-A-2050413 describes a furnace for streams-reforming of sulphur-containing hydrocarbons. To prevent formation of carbon during initial heating of the hydrocarbon, which would deactivate a catalyst, the hydrocarbon is initially heated in the main part of the furnace over an alkaline packing bed and then passed over a catalyst. The tube containing the packing bed may contain fins.

## Summary of the Invention

An object of this invention is to reduce the fired duty and consequently the heat load of the convection flue gases to suit overall plant requirements. This invention may also increase the heat absorbed in the catalyst tubes as a percentage of the total heat fired in the furnace. The reduced fired duty and increased heat absorption also allow the hydrocarbon feed plus steam preheat temperature to be reduced, which permits more economical alloys to be used for the preheater exchanger. Further, this amount of reduction may be varied to allow balancing the steam production to the plant consumption.

Toward the fulfillment of these and other objectives, the reforming furnace tubes of the present invention allow additional heat to be imparted to the catalyst tubes by convection from the heat bearing flue gases leaving the radiant section. Thus by extracting more heat from the flue gases leaving the reforming section, the reforming section efficiency is increased and the fired liberation is reduced. In addition the heat input to other services in the stack convection section is reduced.

The present invention provides a reformer furnace comprising:

a radiant section containing burners;

a tube convection portion through which hot flue gas from the radiant section exhausts, the width of the tube convection portion being narrower than the width of the radiant section, the tube convection portion extending with substantially uniform width from a point near the radiant section to the end of the tube convection portion; and

at least one catalyst tube adapted to contain reforming catalyst, the catalyst tube having a first portion positioned in the tube convection portion and a second portion positioned within the radiant section, the first portion of the catalyst tube having an extended surface to enhance convection heat transfer.

The present invention also provides a process for the production of hydrogen in a steam reforming furnace for a hydrogen or ammonia plant, said furnace, containing a plurality of reforming catalyst-containing tubes, a portion of each of said tubes within said furnace being filled with reforming catalyst, wherein a vaporised hydrocarbon is heated to react with steam in the tubes, comprising: (1) positioning a portion of each of said tubes in a convection section of the furnace and a portion of each of the tubes in a radiant section of the furnace, the portion in the convection section being filled in at least a portion thereof with reforming catalyst, (2) subjecting the vaporised hydrocarbon and steam to largely convective heat transfer from flue gases having enhanced velocity in the convection section of said furnace in a portion of said tubes having an extended surface integral with or attached to an outer surface of said tubes, and (3) subjecting the vaporised hydrocarbon and steam to largely radiant heat transfer in the radiant section of the furnace in another portion of said tubes having a substantially bare outer wall.

## Brief Description of the Drawings

Fig. 1 schematically illustrates a reformer furnace of the prior art;

Fig. 2 schematically illustrates a reformer furnace according to the present invention having a tube convection portion;

Fig. 3 is a cross sectional view of Fig. 2 taken along the line 3-3;

Figs. 4a and 4b are detailed views of a studded extended surface section of the catalyst-filled tube of Fig. 2; and

Fig. 5 is a perspective view of an alternative extended surface section of Fig. 4 comprised of fins.

## Detailed Description of the Preferred Embodiments

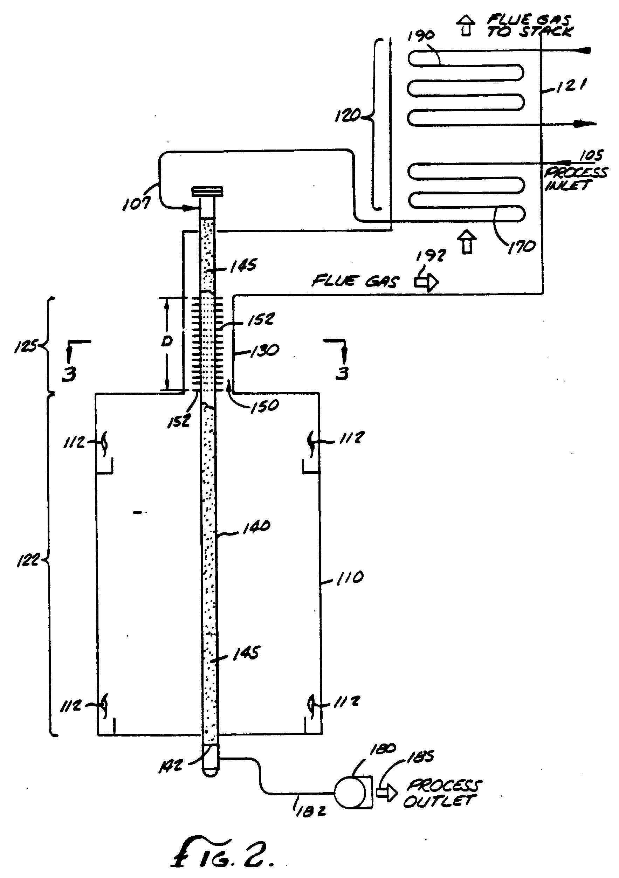

The preferred embodiments will now be described with reference to the drawings. Figure 2 illustrates a reformer furnace 110 having a radiant section 122 and a tube convection portion 125.

The integral radiant-convection reformer tubes of the present invention are vertical catalyst tubes 140 with top inlet 107 and bottom outlet 182. The bottom of tube 140 which is in the radiant section 122 is substantially bare and located adjacent the burners 112. The top of the tube 140 contains the extended outer surface 150, and is located between two parallel walls 130, extending from the top of the radiant section 122. A series of vertical catalyst-filled tubes are arranged in a straight line and since Fig. 1 illustrates a side view of the furnace, only one tube 140 is shown. Within the radiant section 122 are the burners 112, which supply the heat input for the furnace 110. The radiant heat from burners 112 impacts upon the bare walls of catalyst tubes 140. Tube 140 is filled with catalyst 145 which is supported in the tube on a catalyst support plate 142.

The tube convection portion 125 of the reformer furnace 110 has a reduced width through which exiting flue gas 192 must pass out of furnace 110. The tube convection portion 125 has two parallel walls 130, 130 which are much closer to the tube 140 than the walls of the radiant section 122. As such, the velocity of flue gas exiting through the tube convection portion 125 is much higher because of the reduced area through which flue gas 192 must travel, thereby increasing the convection heat transfer from the flue gas 192 to the fluid in the catalyst-filled tube 140.

The tubes 140 may have an extended surface 150 in the tube convection portion 125 to further enhance heat transfer. Over a length "D" between the parallel walls 130, the extended surface 150 may be comprised of a series or a plurality of studs 152 attached to the outer surface of tube 140 and extending radially outward therefrom.

Combustion gases from the radiant section 122 pass between the parallel walls 130, which contain the extended surface portion 150 of the catalyst-filled tubes 140. Convection heat from the flue gas 192 is efficiently imparted to the tubes 140 via the extended surface 150. Some additional heat is also transferred to the tubes 140 by radiation from the flue gas 192 and radiation from the parallel walls 130. After passing through the catalyst-tube convection section 125, the flue gas 192 goes to a conventional horizontal tube convection section 120 (which may inlcude preheater exchanger tubes 170 and recovery exchanger tubes 190 for example) and up stack 121 as shown in Fig. 2.

The basic process has a fluid mixture entering the furnace 110 at a process inlet 105 and passing thorugh a series of heat exchanger tubes 170 located within stack 120. The fluid mixture is preheated by the flue gas 192 before the mixture enters the catalyst-filled tube 140. As the fluid mixture travels through the catalyst-filled tube 140, it is first heated by convection within the tube convection portion 125 where high velocity combustion gases from the radiant section 122 impact the extended surface 150 on tube 140. The fluid mixture within tube 140 thereby under goes substantial heating in the presence of catalyst even before entering the radiant section 122. Within the radiant section 122, tube 140 has a substantially bare outer wall and the fluid mixture within tube 140 is heated primarily through radiant heat transfer. Once the fluid mixture has passed through the radiant section 122, it leaves the furnace 110 through exit line 182 and enters manifold 180 in which the fluid mixture from all the catalyst-filled tubes 140 is combined and exits through process outlet 185.

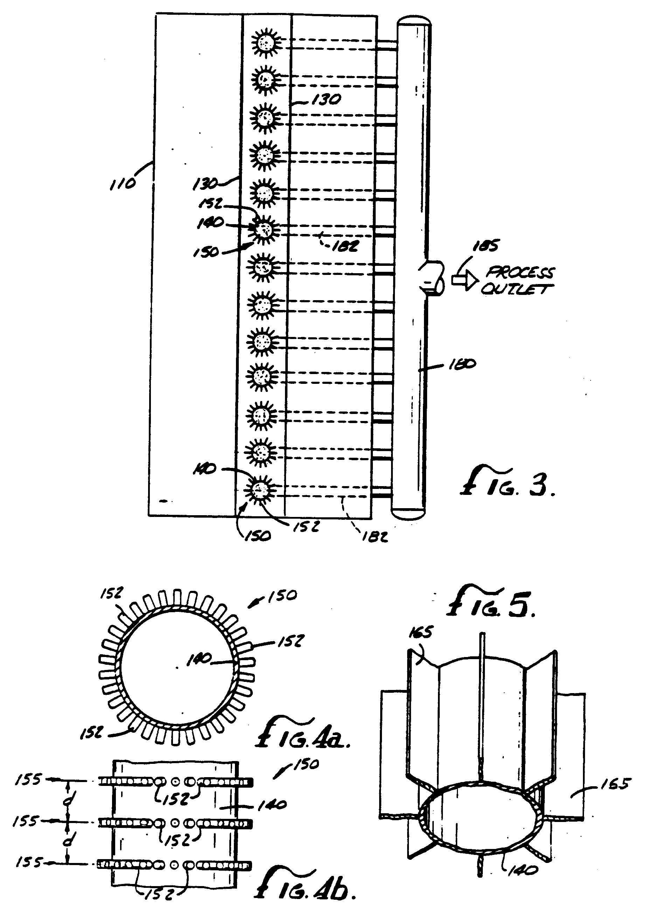

Figure 3 is cross-sectional top view of the furnace 110 of figure 2. Figure 3 illustrates that furnace 110 has many catalyst-filled tubes 140, running the length thereof. Each of the catalyst-filled tubes 140 has an extended surface 150 within the radiant section 122 (see also Figure 2). A typical reformer furnace may have 150 or more reformer tubes. The catalyst-filled tubes 140 are positioned between the two parallel walls 130, 130. Fluid from tubes 140 exit through line 182 into manifold 180, combining and exiting out the process outlet 185.

The catalyst-tube convection portion 125 of tube 140 has an extended surface 150. Figs. 4a and 4b illustrate details of extended surface 150. Extended surface 150 is comrised of a series or plurality of studs 152 attached to the outer surface of the tube 140 and extending radially outward therefrom. The studs 152 are arranged in planes 155 which are spaced a distant of "d" apart. Each plane 155 has approximately 30 studs 152 positioned around the circumference of tube 140.

The combination of stud size, quantity, shape, and spacing of the extended surface section 150 exposed to flue gases leaving the radiant section 122 and their enclosure may be varied to achieve the desired heat absorption characteristic within the catlayst-tube convection portion 125.

Fig. 5 illustrates an alternative embodiment of extended surface 160 comprised of a plurality of fins 165 longitudinally attached along the outer surface of tube 140 and extending radially outward therefrom. Again the size, orientation, and spacing of fins 165 are chosen to achieve the desired heat absorption characteristics. Though two particular designs for the extended surface 150 have been described, other designs may be selected by those skilled in the art to achieve the desired heat transfer characteristics, given the description and disclosure set forth herein.

The catalyst-tube convection portion 125 may also include baffles (not shown) to enhance convection heat transfer to tube 140.

Though Figs. 2 and 3 have been described to have a substantially vertically oriented tube 140, other orientations may be employed. Figs. 2 and 3 illustrates the inlet to the tube 140 on the top of furnace 110, alternatively the inlet to the catalyst tube may be at the bottom and the outlet at the top. In such a case, it would be more suitable to have the radiant portion of the tube at the top and convection portion of the tube at the bottom. In some cases, it may be desirable to have the inlet at the top, outlet at the bottom, and the convection portion at the bottom. A feature of the invention is the combination of a radiant section and a convection portion in a single catalyst tube.

The temperature of the flue gases leaving the catalyst tube portion of this invention can be reduced to approximately 1200 to 1500°F (649 to 816°C) versus 1700 to 1900°F (927 to 1038°C) in current state-of-the-art furnaces, without substantially increasing the catalyst volume or bare tube surface. As a result, the quantity of fuel required per unit of production may be reduced by up to approximately 25 percent.

The overall cost of the reforming furnace using integral radiant-convection catalyst-filled tubes can be significantly less than for those that do not employ this invention. Lower material cost is achieved by the lower flue gas temperature. Typically the preheat exchanger tubes (such as tubes 70 in Fig. 1) are exposed to flue gas at a temperature of 1700 to 1900°F (927 to 1038°C). Such a temperature requires more expensive alloy tube construction as compared to tubes (such as tubes 170 in Fig. 2) of the present invention which are exposed to a lower temperature of 1200 to 1500°F (649 to 816°C).

Examples will now be described comparing the present invention to processes of the prior art. The examples compare processes of reformers for a typical 1500 short tons per day ammonia plant. The examples are summarized in Table 1.

## TABLE 1

| Example | Hydrocarbon Feed Plus Steam Preheat Input Q MMBtu/hr (MMW) | | Furnace Burner Consumption Q MMBtu/hr (MMW) | Turbine Fuel Consumption Q MMBtu/hr (MMW) | Total Fuel Consumption Q MMBtu/hr (MMW) |
|---|---|---|---|---|---|
| 1 | 44 | (12.9) | 302 (88.5) | 191 (56.0) | 493 (144.5) |
| 2 | 44 | (12.9) | 230 (67.4) | 191 (56.0) | 421 (123.4) |
| 3 | 61 | (17.9) | 274 (80.3) | 191 (56.0) | 465 (136.3) |

| Feed Inlet Temp. to Tube | Flue Gas Exit Temp. From Rad. Section | Temp. Flue Gas entry to Stack | Energy Absorbed Radiant + Convection Q MMBtu/hr (MMW) | Stack Gas Exit Temp | Other Recovery Coils Q MMBtu/hr (MMW) |
|---|---|---|---|---|---|
| 1025°F (552°C) | 1850°F (1010°C) | 1850°F (1010°C) | 154 (45.1) | 350°F (177°C) | 203 (59.5) |
| 1025°F (552°C) | 1850°F (1010°C) | 1470°F (799°C) | 154 (45.1) | 350°F (177°C) | 131 (38.4) |
| 1150°F (621°C) | 1850°F (1010°C) | 1850°F (1010°C) | 137 (40.2) | 350°F (177°C) | 179 (52.5) |

## EXAMPLE 1

This example is for a typical 1500 short tons per day ammonia plant according to current technology as in Fig. 1. The reforming furnace contains ONE HUNDRED AND FIFTY TWO catalyst-filled tubes of 5.75 inches (146.05 mm) ID by 39.49 feet (12.04m) high. About 36.5 feet (11.13m) of the catalyst tube height is in the radiant zone. Hydrocarbon feed enters the process inlet 5 and is preheated in exchanger tubes 70 at a heat input rate of 44 MMBtu/hr (12.9 MMW). The feed enters the catalyst-filled tubes 140 at a temperature of 1025°F (551.7°C). The feed is then heated in furnace 10 at an absorption rate of 154 MMBtu/hr (45.1 MMW) which is entirely in a radiant section since this example has no convection section. Fuel consumption is 302 MMBtu/hr (88.5 MMW) for the burners 12 and 191 MMBtu/hr (56.0 MMW) for the gas turbine (not shown) which supplies air for the combustion process. Total fuel consumption is 493 MMBtu/hr (144.5

5

MMW). The combustion gases leave the combustion zone and enter the convection section 20 at a temperature of 1850 ° F (1010 ° C). Within convection section 20, the gases preheat the hydrocarbon feed in exchanger tubes 70. Further heat is recovered in exchanger tubes 90 at a rate of 203 MMBtu/hr (59.5 MMW). The fuel gas to the stack then exits at 350 ° F (176.7 ° C).

**EXAMPLE 2**

This example illustrates a 1500 short tons per day ammonia plant according to the present invention as illustrated in Fig. 2. The number and diameter of the catalyst tubes is the same as in Example 1. The length of the tubes is increased to 42.06 feet (12.82m) with 29.94 feet (9.13m) of the tube length in the radiant section 122. Tubes 140 have 7.27 feet (2.22m) of extended surface 150 which comprises the convection section 125 of the catalyst-filled tubes 140. The extended surface 150 (refer to Figures 4a and b) is comprised of studs 152 of 3/8 inches (9.53 mm) diameter by 3/4 inches (19.04mm) high with 30 studs 152 per plane 155 around the circumference of the tube 140. The planes 155 are spaced 1/2 inch (12.7mm) apart "d" for the full 7.27 foot (2.22) height "D" of the convection section 125. The same results can be obtained with other types of extended surface.

Referring to Table 1, the hydrocarbon feed is preheated at a rate of 44 MMBtu/hr (12.9MMW) in exchanger tubes 170. The feed enters the catalyst-filled tubes 140 at 1025 ° F (551.7 ° C). The feed is heated in furnace 110 at an absorption rate of 154 MMBtu/hr (45.1MMW), some of which occurs in the radiant section 122 and the remainder in the catalyst-tube convection portion 125. Fuel consumption is 230 MMBtu/hr (67.4MMW) at the burners 112 and 191 MMBtu/hr (56.0MMW) for the gas turbine (not shown). Total fuel consumption is 421 MMBtu/hr (123.4MMW).

The combustion gases exit the radiant section 122 and enter the catalyst-tube convection portion 125 at 1850 ° F (1010 ° C). The flue gas 192 enters convection section 120 at 1470 ° F (798.9 ° C). Within convection section 120, the flue gas 192 preheats the hydrocarbon stream in exchanger tubes 170. Further heat is recovered in exchanger tubes 190 at a rate of 131 MMBtu/hr (38.4MMW). The flue gas to the stack exits at 350 ° F (176.7 ° C).

In this example in which the temperature entering the catalyst tube is 1025 ° F (551.7 ° C) (the same as in Example 1), the fuel to the reformer is reduced by about 24 percent. The total fuel to the reformer plus gas turbine is reduced by about 15 percent.

**EXAMPLE 3**

This example is for a conventional reformer similar to that of Example 1 except that the inlet temperature is raised from 1025 ° F (551.7 ° C) to 1150 ° F (621.1 ° C) to reduce the overall fired duty. In this case, there are 124 catalyst tubes of 6.0 inches (152.4mm) ID by 39 feet (11.89m) high.

Referring to Fig. 1 and Table 1, feed enters inlet 5 and is preheated in exchanger tubes 70 at a heat input rate of 61 MMBtu/hr (17.9MMW). The feed enters the catalyst-filled tube 40 at 1150 ° F (621.1 ° C) and is then heated in furnace 10 at an absorption rate of 137 MMBtu/hr (40.2MMW) which is entirely in a radiant section since this example has no catalyst-tube convection portion. Fuel consumption is 274 MMBtu/hr (80.3MMW) for the burners 12 and 191 MMBtu/hr (56.0MMW) for the gas turbine (not shown) for a total fuel consumption of 465 MMBtu/hr (136.3MMW).

The combustion gases leave the combustion zone and enter convection section 20 (the fuel gas 92) at a temperature of 1850 ° F (1010 ° C). The flue gas 92 preheats hydrocarbon feed in exchanger tubes 70. Further heat is recovered at a rate of 179 MMBtu/hr (51.6MMW) in exchanger tubes 90. Flue gas to the stack exits at 350 ° F (176.7 ° C).

Comparing the process conditions for the integral radiant-convection catalyst-filled tube of Example 2 with Example 3, the present as shown in Example 2 reduces the fuel to the reformer by 16 percent and reduces the total fuel required by 9 percent over Example 3.

In this example, the hydrocarbon feed plus steam temperature entering the catalyst-filled tubes is 125 ° F (69 ° C) less for the integral radiant-convection catalyst-filled tube of Example 2, thus achieving two objectives simultaneously: (1) a substantially lower cost for the hydrocarbon feed plus steam coil and (2) reducing the fuel firing required for the reforming reaction.

Thus, a furnace and process are disclosed which reform hydrocarbons to obtain a gas containing substantial amounts of hydrogen. While embodiments and applications of this invention have been shown and described, it would be apparent to those skilled in the art that other modifications are possible without departing from the inventive concepts herein. The invention, therefore, it not to be restricted except as in the appended claims.

**Claims**

1.  A reformer furnace (110) comprising:
    a radiant section (122) containing burners (112);
    a tube convection portion (125) through which hot flue gas from the radiant section (122) exhausts the width of the tube convection portion being narrower then the width of the radiant section, the tube convection portion extending with substantially uniform width from a point near the radiant section to the end of the tube convection portion; and
    at least one catalyst tube (140) adapted to contain reforming catalyst, the catalyst tube (140) having a first portion positioned in the tube convection portion (125) and a second portion positioned within the radiant section (122), the first portion of the catalyst tube having an extended surface (150) to enhance convection heat transfer.

2.  A furnace according to claim 1 wherein the tube convection portion has two substantially parallel walls and the first portion of the catalyst tube is positioned between the parallel walls.

3.  A furnace according to claim 1 or claim 2 wherein the extended surface comprises a plurality of studs or a plurality of fins extending radially outward from the first portion of the catalyst tube.

4.  A furnace according to claim 3 wherein the extended surface comprises a plurality of studs arranged in planes along the length of the tube convection portion with about 30 studs per plane, the planes being spaced at about 13mm (1/2 inch) apart, and the studs having a diameter of about 1cm (3/8 inch) and a length of about 19mm (3/4 inch).

5.  A furnace according to any one of claims 1 to 4 further comprising baffles in the tube convection portion.

6.  A furnace according to any one of claims 1 to 5 wherein the distance between reformer walls at the tube convection portion is substantially narrower than the distance between reformer walls at the radiant section such that the reformer walls at the tube convection portion are close to the extended surface of the catalyst-filled tube to enhance heat transfer to the tube.

7.  A furnace according to any one of claims 1 to 6 wherein the second portion of the catalyst tube has substantially bare outer surface.

8.  A furnace according to any one of claims 1 to 7 wherein the catalyst tube is oriented substantially vertically and either (a) the radiant section is at the bottom of the furnace and the tube convection portion is at the top of the furnace or (b) the radiant section is at the top of the furnace and the tube convection portion is at the bottom of the furnace.

9.  A process for the production of hydrogen in a steam reforming furnace for a hydrogen or ammonia plant, said furnace containing a plurality of reforming catalyst-containing tubes, a portion of each of said tubes within said furnace being filled with reforming catalyst, wherein a vaporised hydrocarbon is heated to react with steam in the tubes, comprising: (1) positioning a portion of each of said tubes in a convection section of the furnace and a portion of each of the tubes in a radiant section of the furnace the portion in the convection section being filled in at least a portion thereof with reforming catalyst, (2) subjecting the vaporised hydrocarbon and steam to largely convective heat transfer from flue gases having enhanced velocity in the convection section of said furnace in a portion of said tubes having an extended surface integral with or attached to an outer surface of said tubes, and (3) subjecting the vaporized hydrocarbon and steam to largely radiant heat transfer in the radiant section of the furnace in another portion of said tubes having a substantially bare outer wall.

10. A process for the production of hydrogen which comprises (a) reacting a vaporised hydrocarbon with steam in a vertical tube containing steam reforming catalyst, said tube having two sections, wherein the step of reacting comprises (1) heating the hydrocarbon and steam largely by convection in a first section of said tube, the first section having an extended surface integral with or attached to an outer surface of said tube, and (2) heating the hydrocarbon and steam in a second section of said tube largely by radiation from a radiant section of the furnace, the second section of said tube having a

7

substantially bare outer wall, and (b) enhancing velocity of flue gas along the first section of said tube.

**11.** A process according to claim 9 or 10 wherein the catalyst tube is vertical and (a) the inlet to the catalyst tube is at the top, the outlet from the catalyst tube is at the bottom, and the flue gases leave from the top of the furnace of (b) the inlet to the catalyst tube is at the top, and the flue gases leave at the bottom of the furnace or (c) the inlet to the catalyst tube is at the top, the outlet from the catalyst tube is at the bottom, and the flue gases leave at the bottom.

**12.** A process according to any one of claims 9 to 11 comprising the steps of:
preheating the hydrocarbon stream;
passing the preheated hydrocarbon stream into a catalyst-filled tube within a furnace;
heating the hydrocarbon stream in a convection portion of the furnace wherein flue gas has enhanced velocity and wherein a portion of the catalyst-filled tube has an extended outer surface integral with or attached to an outer surface of said tube within the convection portion to enhance convection heat transfer to the hydrocarbon stream within the catalyst-filled tube; and
heating the hydrocarbon stream in a radiant section of the furnace wherein a portion of the tube has a substantially bare outer surface within the radiant section.

**13.** A process according to claim 12 wherein the extended surface of the catalyst-filled tube is comprised of a plurality of studs attached to the otuer surface of the catalyst-filled tube and extending radially outward therefrom.

**14.** A process according to claim 12 wherein the extended surface of the catalyst-filled tube is comprised of a plurality of fins attached to the outer surface of the catalyst-filled tube and extending radially outward therefrom.

**15.** A process according to any one of claims 12 to 14 further comprising creating turbulence in the convection portion with baffles.

**Patentansprüche**

**1.** Reformierofen (110) umfassend:
eine Strahlungszone (122), die Brenner (112) enthält;
einen Rohr-Konvektionsteil (125), durch den heißes Abgas aus der Strahlungszone (122) austritt, wobei die Breite des Rohr-Konvektionsteils geringer ist als die Breite der Strahlungszone, und sich der Rohr-Konvektionsteil mit im wesentlichen gleicher Breite von einer Stelle nahe der Strahlungszone zum Ende des Rohr-Konvektionsteils erstreckt; und
mindestens ein Katalysatorrohr (140), das den Reformierkatalysator enthält, wobei das Katalysatorrohr (140) einen ersten Teil besitzt, der sich im Rohr-Konvektionsteil (125) befindet, und einen zweiten Teil, der sich innerhalb der Strahlungszone (122) befindet, wobei der erste Teil des Katalysatorrohrs eine vergrößerte Oberfläche (150) besitzt, um den Konvektions-Wärmeaustausch zu erhöhen.

**2.** Ofen nach Anspruch 1, dadurch gekennzeichnet, daß der Rohr-Konvektionsteil im wesentlichen 2 parallele Wände aufweist, und der erste Teil des Katalysatorrohrs zwischen den parallelen Wänden liegt.

**3.** Ofen nach Anspruch 1 oder 2, dadurch gekennzeichnet, daß die vergrößerte Oberfläche eine Vielzahl von Stiften oder eine Vielzahl von Rippen umfaßt, die sich vom ersten Teil des Katalysatorrohrs radial nach außen erstrecken.

**4.** Ofen nach Anspruch 3, dadurch gekennzeichnet, daß die vergrößerte Oberfläche eine Vielzahl von Stiften umfaßt, die in Ebenen entlang der Länge des Rohr-Konvektionteils mit ca. 30 Stiften pro Ebene angeordnet sind, und die Ebenen sich in einem Abstand von ca. 13 mm (1/2 inch) voneinander befinden, und die Stifte einen Durchmesser von ca. 1 cm (3/8 inch) und eine Länge von ca. 19 mm (3/4 inch) besitzen.

**5.** Ofen nach einem der Ansprüche 1 bis 4, dadurch gekennzeichnet, daß er in dem Rohr-Konvektionsteil außerdem Prallflächen aufweist.

**6.** Ofen nach einem der Ansprüche 1 bis 5, dadurch gekennzeichnet, daß der Abstand zwischen den Reformerwänden beim Rohr-Konvektionsteil wesentlich geringer ist, als der Abstand zwischen den Reformerwänden bei der Strahlungszone, wodurch die Reformerwände beim Rohr-Konvektionsteil sich nahe an der vergrößerten Oberfläche des mit Katalysator gefüllten Rohrs befinden, um den Wärmeaustausch zum Rohr zu vergrößern.

**7.** Ofen nach einem der Ansprüche 1 bis 6, dadurch gekennzeichnet, daß der zweite Teil des Katalysatorrohrs eine im wesentlichen blanke äußere Oberfläche besitzt.

**8.** Ofen nach einem der Ansprüche 1 bis 7, dadurch gekennzeichnet, daß das Katalysatorrohr im wesentlichen vertikal ausgerichtet ist, und sich entweder (a) die Strahlungszone im unteren Teil des Ofens und der Rohr-Konvektionsteil im oberen Teil des Ofens befindet, oder sich (b) die Strahlungszone im oberen Teil des Ofens und der Rohr-Konvektionsteil im unteren Teil des Ofens befindet.

**9.** Verfahren zur Herstellung von Wasserstoff in einem Dampfreformierofen einer Wasserstoff- oder Ammoniakanlage, wobei der Ofen eine Vielzahl von einen Reformierkatalysator enthaltenden Rohren enthält, und ein Teil jedes dieser Rohre innerhalb des Ofens mit einem Reformierkatalysator gefüllt ist, wonach ein verdampfter Kohlenwasserstoff erhitzt wird, um mit dem Dampf in den Rohren zu reagieren, umfassend: (1) Anbringen eines Teiles jeder dieser Rohre in einem Konvektionsteil des Ofens und eines Teils jeder dieser Rohre in einer Strahlungszone des Ofens, wobei der Teil in dem Konvektionsteil zumindestens zum Teil mit Reformierkatalysator gefüllt ist, (2) man den verdampften Kohlenwasserstoff und den Dampf im wesentlichen einer Konvektionswärmeübertragung aus Abgasen mit einer erhöhten Geschwindigkeit in der Konvektionszone des Ofens in einem Teil der Rohre unterwirft, die eine vergrößerte Oberfläche besitzen, die mit einer äußeren Oberfläche der Rohre integriert oder an diese angebracht ist, und (3) man den verdampften Kohlenwasserstoff und Dampf im wesentlichen einer Strahlungswärmeübertragung in der Strahlungszone des Ofens in einem anderen Teil der Rohre, der eine im wesentlichen blanke äußere Wand besitzt, aussetzt.

**10.** Verfahren zur Herstellung von Wasserstoff umfassend (a) Umsetzung eines verdampften Kohlenwasserstoffs mit Dampf in einem vertikalen Rohr, das einen Dampfreformierkatalysator enthält, wobei das Rohr 2 Zonen besitzt, und die Reaktionsstufe umfaßt (1) Erhitzen des Kohlenwasserstoffs und Dampfs durch im wesentlichen Konvektion in einer ersten Zone des Rohrs, wobei die erste Zone eine vergrößerte Oberfläche besitzt, die mit einer äußeren Oberfläche des Rohr integriert oder an diese angebracht ist, und (2) Erhitzen des Kohlenwasserstoffs und Dampfs in einer zweiten Zone des Rohrs durch im wesentlichen Strahlung aus einer Strahlungszone des Ofens, wobei die zweite Zone des Rohrs eine im wesentlichen blanke äußere Wand besitzt, und (b) Erhöhen der Geschwindigkeit des Abgases entlang der ersten Zone des Rohrs.

**11.** Verfahren nach Anspruch 9 oder 10, dadurch gekennzeichnet, daß das Katalysatorrohr vertikal ist und (a) der Einlaß zum Katalysatorrohr sich am oberen Ende, und der Auslaß aus dem Katalysatorrohr am Boden befindet, und die Abgase aus dem oberen Ende des Ofens austreten, oder (b) der Einlaß zum Katalysatorrohr am oberen Ende ist, und die Abgase aus dem Boden des Ofens austreten, oder (c) der Einlaß zum Katalysatorrohr am oberen Ende, und der Auslaß aus dem Katalysatorrohr am Boden ist, und die Abgase am Boden austreten.

**12.** Verfahren nach einem der Ansprüche 9 bis 11 umfassend die Stufen:
Vorerhitzen des Kohlenwasserstoffstroms;
Einführen des vorerhitzten Kohlenwasserstoffstroms in ein mit Katalysator gefülltes Rohr innerhalb eines Ofens;
Erhitzen des Kohlenwasserstoffstroms in einer Konvektionszone des Ofens, in der Abgas eine erhöhte Geschwindigkeit besitzt, und worin ein Teil des mit Katalysator gefüllten Rohrs eine vergrößerte äußere Oberfläche besitzt, die mit einer äußeren Oberfläche des Rohrs innerhalb des Konvektionsteils integriert oder an diese angebracht ist, um die Konvektionswärmeübertragung zum Kohlenwasserstoffstrom innerhalb des mit Katalysator gefüllten Rohrs zu erhöhen, und Erhitzen des Kohlenwasserstoffstroms in einer Strahlungszone des Ofens, worin ein Teil des Rohrs innerhalb der Strahlungszone eine im wesentlichen blanke äußere Oberfläche besitzt.

13. Verfahren nach Anspruch 12, dadurch gekennzeichnet, daß die vergrößerte Oberfläche des mit Katalysator gefüllten Rohrs aus einer Vielzahl von der äußeren Oberfläche des mit Katalysator gefüllten Rohrs angebrachten Stiften besteht, die sich davon radial nach außen erstrecken.

14. Verfahren nach Anspruch 12, dadurch gekennezeichnet, daß die vergrößerte Oberfläche des mit Katalysator gefüllten Rohrs aus einer Vielzahl von an der äußeren Oberfläche des mit Katalysator gefüllten Rohrs angebrachten Rippen besteht, die sich davon radial nach außen erstrecken.

15. Verfahren nach einem der Ansprüche 12 bis 14, dadurch gekennzeichnet, daß man im Konvektionsteil durch Prallflächen eine Turbulenz erzeugt.

**Revendications**

1. Four de réformage (110) comprenant:
   une section radiante (122) contenant des brûleurs (112);
   une portion tubulaire de convection (125) par laquelle s'échappe le gaz de combustion chaud provenant de la section radiante (122), la largeur de la portion tubulaire de convection étant plus étroite que la largeur de la section radiante, la portion tubulaire de convection s'étendant sur une largeur sensiblement uniforme depuis un point proche de la section radiante jusqu'à l'extrémité de la portion tubulaire de convection;
   au moins un tube à catalyseur (140) adapté à contenir un catalyseur de réformage, le tube à catalyseur (140) comprenant une première portion positionnée dans la portion tubulaire de convection (125) et une seconde portion positionnée dans la section radiante (122), la première portion du tube à catalyseur ayant une surface étendue (150) pour améliorer le transfert de chaleur par convection.

2. Four selon la revendication 1, dans lequel la portion tubulaire de convection comprend deux parois sensiblement parallèles et la première portion du tube à catalyseur est positionnée entre les parois parallèles.

3. Four selon la revendication 1 ou la revendication 2, dans lequel la surface étendue comprend une pluralité d'appendices ou une pluralité d'ailettes s'étendant radialement vers l'extérieur à partir de la première portion du tube à catalyseur.

4. Four selon la revendication 3, dans lequel la surface étendue comprend une pluralité d'appendices disposés dans des plans le long de la longueur de la portion tubulaire de convection, avec environ 30 appendices par plan, les plans étant espacés d'environ 13 mm (1/2 pouce) et les appendices ayant un diamètre d'environ 1 cm (3/8 pouce) et une longueur d'environ 19 mm (3/4 pouce).

5. Four selon l'une quelconque des revendications 1 à 4, comprenant en outre des chicanes dans la portion tubulaire de convection.

6. Four selon l'une quelconque des revendications 1 à 5, dans lequel la distance entre les parois du réformeur dans la portion tubulaire de convection est sensiblement plus étroite que la distance entre les parois du réformeur dans la section radiante, de manière que les parois du réformeur dans la portion tubulaire de convection soient proches de la surface étendue du tube rempli de catalyseur pour améliorer le transfert de chaleur vers le tube.

7. Four selon l'une quelconque des revendications 1 à 6, dans lequel la seconde portion du tube à catalyseur comprend une surface externe sensiblement nue.

8. Four selon l'une quelconque des revendications 1 à 7, dans lequel le tube à catalyseur est orienté sensiblement verticalement et soit (a) la section radiante est dans la partie inférieure du four et la portion tubulaire de convection est dans la partie supérieure, soit (b) la section radiante est dans la partie supérieure du four et la portion tubulaire de convection est dans la partie inférieure du four.

**9.** Procédé pour la production d'hydrogène dans un four de réformage à vapeur pour une usine d'hydrogène ou d'ammoniac, ledit four comprenant une pluralité de tubes contenant un catalyseur de réformage, une portion de chacun desdits tubes à l'intérieur dudit four étant remplie de catalyseur de réformage, dans lequel un hydrocarbure vaporisé est chauffé pour réagir avec la vapeur dans les tubes, comprenant:

(1) le positionnement d'une portion de chacun desdits tubes dans une section de convection du four et une portion de chacun des tubes dans une section radiante du four, la portion dans la section de convection étant remplie dans une partie au moins de celle-ci avec le catalyseur de réformage; (2) la soumission de l'hydrocarbure vaporisé et de la vapeur à un transfert de chaleur largement par convection à partir des gaz de combustion dont la vitesse est plus élevée dans la section de convection dudit four dans une portion desdits tubes ayant une surface étendue d'un seul tenant ou fixée à une surface externe desdits tubes, et (3) la soumission de l'hydrocarbure vaporisé et de la vapeur à un transfert de chaleur largement par rayonnement dans la section radiante du four dans une autre portion desdits tubes comprenant une paroi externe sensiblement nue.

**10.** Procédé pour la production d'hydrogène qui comprend (a) la réaction d'un hydrocarbure vaporisé avec de la vapeur dans un tube vertical contenant un catalyseur de réformage à vapeur, ledit tube comportant deux sections, dans lequel l'étape de réaction comprend (1) le chauffage de l'hydrocarbure et de la vapeur largement par convection dans une première section dudit tube, la première section ayant une surface étendue d'un seul tenant avec ou fixée à une surface externe dudit tube, et (2) le chauffage de l'hydrocarbure et de la vapeur dans une seconde section dudit tube largement par rayonnement à partir d'une section radiante du four, la seconde section dudit tube présentant une paroi externe sensiblement nue, et (b) l'augmentation de la vitesse du gaz de combustion le long de la première section dudit tube.

**11.** Procédé selon la revendication 9 ou 10, dans lequel le tube à catalyseur est vertical et (a) l'entrée dans le tube à catalyseur est à la partie supérieure, la sortie du tube à catalyseur est à la partie inférieure, et les gaz de combustion s'échappent par la partie supérieure du four ou (b) l'entrée du tube à catalyseur est à la partie supérieure et les gaz de combustion s'échappent par la partie inférieure du four, ou (c) l'entrée vers le tube à catalyseur est à la partie supérieure, la sortie du tube à catalyseur est dans la partie inférieure et les gaz de combustion s'échappent par la partie inférieure.

**12.** Procédé selon l'une quelconque des revendications 9 à 11, comprenant les étapes consistant à:

préchauffer le courant d'hydrocarbure;

faire passer le courant d'hydrocarbure préchauffé par un tube rempli de catalyseur dans un four;

chauffer le courant d'hydrocarbure dans une portion de convection du four dans laquelle la vitesse du gaz de combustion est plus élevée et dans laquelle une portion du tube rempli de catalyseur comporte une surface externe étendue d'un seul tenant avec ou fixée à une surface externe dudit tube dans la portion de convection pour améliorer le transfert de chaleur par convection vers le courant d'hydrocarbure dans le tube rempli de catalyseur; et

chauffer le courant d'hydrocarbure dans une section radiante du four dans laquelle une portion du tube comporte une surface externe sensiblement nue dans la section radiante.

**13.** Procédé selon la revendication 12, dans lequel la surface étendue du tube rempli de catalyseur comprend une pluralité d'appendices fixés à la surface externe du tube rempli de catalyseur et s'étendant radialement vers l'extérieur de celui-ci.

**14.** Procédé selon la revendication 12, dans lequel la surface étendue du tube rempli de catalyseur comprend une pluralité d'ailettes fixées à la surface externe du tube rempli de catalyseur et s'étendant radialement vers l'extérieur de celui-ci.

**15.** Procédé selon l'une quelconque des revendications 12 à 14, comprenant en outre la création de turbulences dans la portion de convection par des chicanes.

FLUE GAS
TO STACK

90

20

5
PROCESS
INLET

70

FLUE GAS

92

45

40

12

12

12

12

45

10

80

85

PROCESS
OUTLET

FIG.1.
PRIOR ART

12

FLUE GAS
TO STACK

190

121

120

105
PROCESS
INLET

107

145

170

192

FLUE GAS

152

130

125

3

D

150

152

3

112

112

122

140

110

145

112

112

142

180

185

PROCESS
OUTLET

182

FIG. 2.

FIG. 3.

FIG. 4a.

FIG. 4b.

FIG. 5.

PROCESS OUTLET